# EUROPEAN PATENT SPECIFICATION

(11) **EP 3 106 647 B1**
(45) Date of publication and mention of the grant of the patent: **27.10.2021**
(21) Application number: 16174866.0
(22) Date of filing: 16.06.2016
(51) Int. Cl.: F02C 7/141, F02C 9/18, F02C 7/08

(54) **TEMPERATURE-MODULATED RECUPERATED GAS TURBINE ENGINE**
TEMPERATURMODULIERTER REKUPERATIVER GASTURBINENMOTOR
MOTEUR À TURBINE À RÉCUPÉRATION DE GAZ MODULÉE PAR LA TEMPÉRATURE

(30) Priority: 16.06.2015 US 201514740636
(43) Date of publication of application: 21.12.2016
(73) Proprietor: Raytheon Technologies Corporation, Farmington, CT 06032 (US)
(72) Inventor: PERLAK, Jeffrey F., South Windsor, CT Connecticut 06074 (US); STAUBACH, Joseph B., Colchester, CT Connecticut 06415 (US); SCHWARZ, Frederick M., Glastonbury, CT Connecticut 06033 (US); HILL, James D., Tolland, CT Connecticut 06084 (US)
(74) Representative: Dehns

(56) References cited:
- EP-A1- 2 644 847
- GB-A- 836 135
- JP-A- S57 146 028
- US-A1- 2005 235 627
- None

## Description

### BACKGROUND

Gas turbine engines typically include a compressor, a combustor, and a turbine. Air is pressurized in the compressor and fed into the combustor with fuel to generate a hot exhaust stream that expands over the turbine. A recuperated gas turbine engine additionally includes a heat exchanger, also known as a recuperator, to enhance efficiency. The heat exchanger extracts heat from the hot exhaust stream to preheat the air injected into the combustor. The heat exchanger is formed of high temperature resistance materials to withstand the relatively high temperature of the exhaust stream.

JP 56029894 discloses a prior art regenerative cycle type gas turbine. US 2005/0235627 A1 discloses a prior art gas turbine heat exchanger assembly and method for fabricating same.

GB 836,135 discloses prior art improvements in and relating to a gas turbine plant.

### SUMMARY

According to a first aspect of the present invention, there is provided a recuperated gas turbine engine as set forth in claim 1.

In an embodiment, the temperature-control module includes an exhaust diverter valve in the exhaust duct, and the exhaust diverter valve is moveable between open and closed positions with respect to permitting flow of the hot turbine exhaust stream across the heat exchanger.

In a further embodiment of any of the foregoing embodiments, the temperature-control module includes the second branch or the additional compressor bleed line and a valve operable to control flow through the second branch or the additional compressor bleed line into the exhaust duct.

In a further embodiment of any of the foregoing embodiments, the temperature-control module includes a flow distributor in the exhaust duct. The flow distributor is in communication with either the compressor bleed line or an additional independent compressor bleed line, and the flow distributor includes a plurality of cooling holes opening to the exhaust duct.

In a further embodiment of any of the foregoing embodiments, the compressor section includes an axial compressor and a centrifugal compressor.

In a further embodiment of any of the foregoing embodiments, the axial compressor includes no more than three compressor stages.

In a further embodiment of any of the foregoing embodiments, the compressor section has an overall pressure ratio ("OPR") in a range of 12 - 24.

In a further embodiment of any of the foregoing embodiments, the compressor section has a size rating of 0.7 pounds per second (0.3 kg/s) at an exit of the compressor section.

A further embodiment of any of the foregoing embodiments includes a controller in communication with at least the compressor bleed line and the heat exchanger temperature-control module. The controller is configured to selectively regulate feed of compressed air through the compressor bleed line into the heat exchanger and configured to selectively regulate at least one of temperature and flow of the hot turbine exhaust stream with respect to the heat exchanger.

In a further embodiment of either of the foregoing embodiments, the controller is configured with at least low and high power modes with respect to back pressure on the turbine section, in the low power mode the controller feeding the compressed air through the compressor bleed line to the heat exchanger and opening the exhaust diverter valve to permit flow of the hot turbine exhaust stream across the heat exchanger, and in the high power mode the controller reducing feed of the compressed air through the compressor bleed line to the heat exchanger and closing the exhaust diverter valve to reduce flow of the hot turbine exhaust stream across the heat exchanger.

In a further embodiment of any of the foregoing embodiments, the controller is configured to selectively regulate the temperature or the flow of the hot turbine exhaust stream with respect to a heat-exchanger-engine parameter representative of a temperature of the heat exchanger.

According to a further aspect of the present invention, there is provided a method as set forth in claim 12.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example recuperated gas turbine engine that includes a temperature-control module.
Figure 2 illustrates an example temperature-control module that includes an exhaust diverter valve for regulating flow of a hot turbine exhaust stream.
Figures 3A, 3B, and 3C illustrate, respectively, a low power mode, a high power mode, and an intermediate power mode of operation of an example recuperated gas turbine engine that includes a temperature-control module.
Figure 4 illustrates another example recuperated gas turbine engine that includes a temperature-control module for regulating temperature of a hot turbine exhaust stream using a single bleed line.
Figure 5 illustrates another example recuperated gas turbine engine that includes a temperature-control module for regulating temperature of a hot turbine exhaust stream using dual bleed lines.
Figure 6 illustrates another example portion of a temperature-control module that includes a flow distributor with a plurality of cooling holes.

### DETAILED DESCRIPTION

Generally, recuperating heat exchangers in gas turbine engines are limited by a maximum operating temperature above which the durability of heat exchanger potentially declines at an undesirable rate. The engine is thus designed such that the highest operating temperatures do not exceed, or do not often exceed, the temperature limit. However, such an approach constrains engine design and the engine operating envelope, particularly under severe temperature ambient environments and/or at high engine powers. In this regard, as will be described herein, the recuperated gas turbine engine has the ability to modulate flow or temperature of the exhaust stream to thermally protect the recuperating heat exchanger and thus enable expansion of the operating envelope for recuperated gas turbine engines.

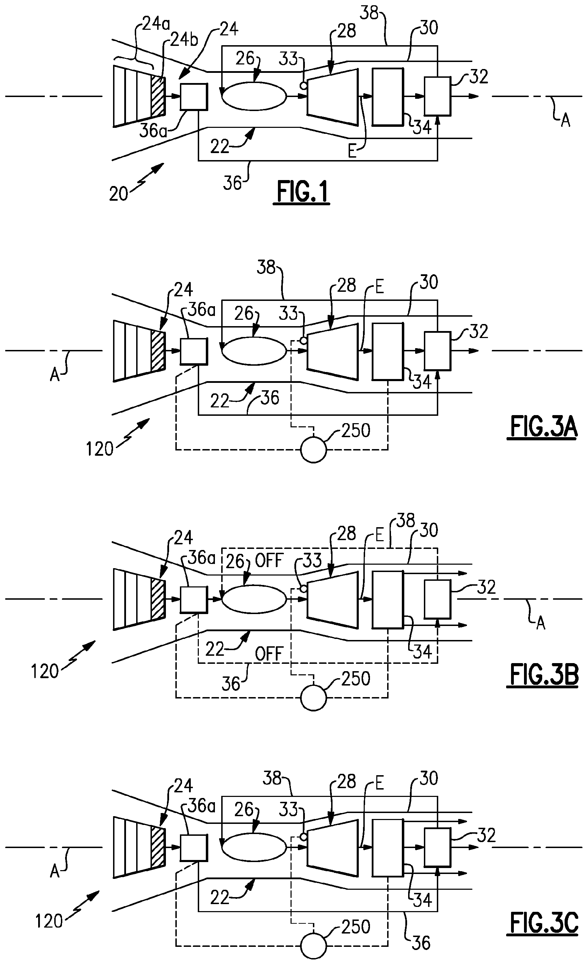

Figure 1 schematically illustrates the recuperated gas turbine engine 20 (hereafter "engine 20"). The engine 20 has an engine core 22 that generally includes a compressor section 24, a combustor section 26, and a turbine section 28. Although not limited, the compressor section 24 and the turbine section 26 can be mounted on a single, common shaft for co-rotation about an engine central axis A. For instance, the engine 20 can be, but is not limited to, a turboshaft engine typically used in rotary aircraft or a turbofan engine.

In this example, the compressor section 24 includes an axial compressor 24a and a centrifugal compressor 24b. For example, the axial compressor 24a includes no more than three compressor stages, and can include one, two, or three such stages (three shown schematically). Additionally, the compressor section 24 in this example includes a single centrifugal compressor 24b, although it is also conceivable that compressor section 24 include two or more centrifugal compressors.

The compressor section 24 has an overall pressure ratio ("OPR") in a range of 12 - 24. For example, the OPR in this range is also greater than 16 or greater than 20. The OPR is the ratio of pressure at the outlet of the last stage of the compressor section 24 to pressure at the inlet of the first stage of the compressor section 24.

The given range of OPR is relatively low for aircraft gas turbine engines and potentially facilitates reductions in exit temperature, design complexity, assembly, and maintenance in comparison to higher OPR compressors. Moreover, the compressor section 24 can have a relatively large annulus size, which potentially reduces leakage losses relative to gas path flow. One representation of annulus size is "core size" and is represented by the corrected mass air flow at the outlet of the last stage of the compressor section 24. For example, the core size of the engine 20 is 0.3 to 1.0 pounds per second, and in a further example is 0.7 pounds per second (0.3 kg/s).

The engine 20 further includes an exhaust duct 30 downstream of the turbine section 28. In this disclosure, "downstream" and "upstream" refer to the gas flow through the engine core 22, which in Figure 1 is generally from left-to-right, although portions of the engine 20 may have flow from right-to-left if a reverse-flow architecture is used. The exhaust duct 30 receives a hot turbine exhaust stream E from the turbine section 28. The exhaust duct 30 includes a (recuperating) heat exchanger 32 and a temperature-control module 34 upstream of the heat exchanger 32. In the illustrated example, the heat exchanger 32 is aft-mounted at the aft or aft-most end of the engine 20. In other examples, the heat exchanger 32 can be side-mounted outwards of the turbine section 28 and/or combustor section 26 by including a turn section such that the exhaust duct 30 turns outward and forward back toward the combustor section 26. For example, the heat exchanger 32 can be, but is not limited to, a cross-flow tube and fin heat exchanger. The heat exchanger 32 can be formed of high temperature resistance materials, such as but not limited to superalloys, ceramic materials, and glass or glass/ceramic materials.

The combustor section 26 and the turbine section 28 can also be configured for relatively high temperatures. For example, the combustor section 26 is capable of generating a relatively high combustor outlet temperature, and the turbine section 28 includes airfoils that are internally cooled to resist the temperature of the combustion gases. In one example, the turbine airfoils include micro-channel cooling passages, which utilize relatively thin walls with micro-channels for enhanced cooling capability. Such micro-channels can be fabricated using refractory metal core investment casting techniques, known in the art.

A compressor bleed line 36 leads from the compressor section 24 into the heat exchanger 32. A bleed valve 36a may be provided in the compressor section 24 to selectively feed compressed bleed air to the heat exchanger 32. A compressor return line 38 leads from the heat exchanger 32 into the engine core 22 upstream of the combustor section 26. For example, compressor return line 38 leads into an inlet of the combustor section 26.

The temperature-control module 34 serves to thermally protect the heat exchanger 32 and is operable to selectively modulate the hot turbine exhaust stream E. For example, the temperature-control module 34 is operable to modulate at least one of flow and temperature of the hot turbine exhaust stream E. In one example, the temperature may be modulated selectively based upon an engine parameter. The engine parameter either correlates to a condition of the heat exchanger or is a directly measured heat exchanger condition such as pressure and/or temperature. As an example, the engine parameter correlates to the temperature of the heat exchanger 32, and may serve as a control parameter with respect to a maximum allowable temperature or a maximum desired temperature of the heat exchanger 32. In this regard, the temperature-control module 34 can include one or more diverters that is/are moveable to selectively direct flow of hot turbine exhaust stream E away from the heat exchanger, or the temperature-control module 34 may be connected with a bleed from the compressor section 24 to selectively provide relatively cool compressor air into the hot turbine exhaust stream E to modulate temperature.

The compressor bleed line 36, bleed valve 36a, and temperature-control module 34 can be operated automatically or manually through a user or pilot control. For example, the temperature-control module 34 can be operated automatically or manually in response to the engine parameter. In one example, variations in the engine parameter are mapped to variations in the heat exchanger 32. The heat exchanger variations can include, but are not limited to, temperature and pressure. In one further example, the engine parameter is an inlet temperature at the first stage of the turbine section 28. In this regard, an engine parameter sensor 33 can be provided to measure the engine parameter and send signals to a gauge or controller. For instance, the engine parameter sensor 33 can be a thermocouple or temperature sensor. In one further example, the thermocouple or temperature sensor is provided at the inlet of the first stage of the turbine section 28. Such an inlet temperature is mapped to downstream temperature and/or pressure conditions produced at the heat exchanger 32 and thus serves as an indicator of the condition of the heat exchanger 32. Likewise, additional or different engine parameters, such as but not limited to, temperatures at other engine locations, rotational shaft speeds, fuel flow, direct temperature of the heat exchanger, and combinations, could also be used as an indicator of the condition of the heat exchanger 32. The temperature-control module 34 can then be operated to modulate the flow or the temperature of the hot turbine exhaust stream E with respect to the engine parameter, to avoid exposure of the heat exchanger to excessively hot temperatures and/or to maintain the heat exchanger 32 at a desirably low temperature.

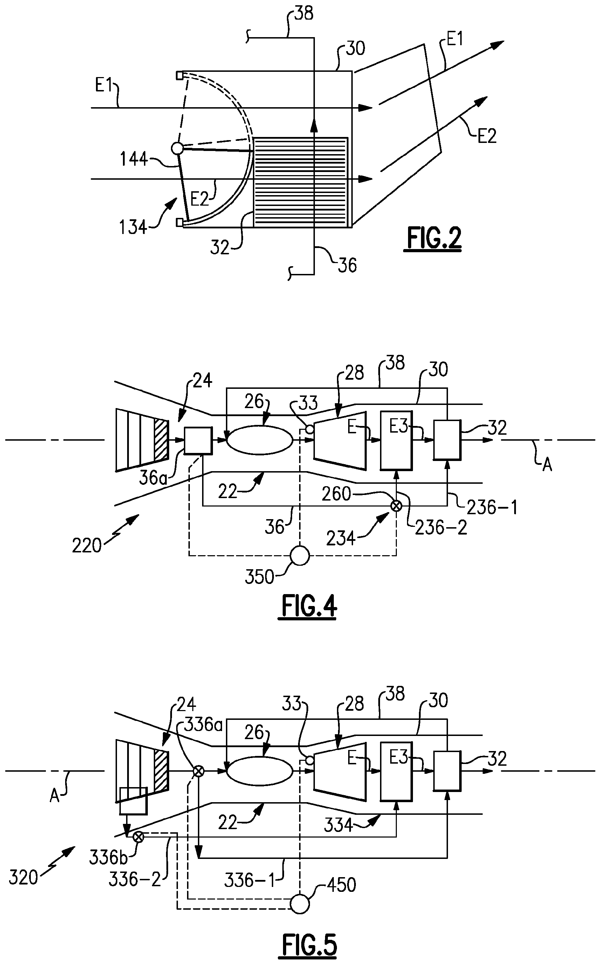

Figure 2 illustrates an example of a temperature-control module 134. Like reference numerals are used herein to designate like elements where appropriate and reference numerals with the addition of one-hundred or multiples thereof designate modified elements that are understood to incorporate the same features and benefits of the corresponding elements. In this example, the temperature-control module 134 includes an exhaust diverter valve 144 situated in the exhaust duct 30. The exhaust duct 30 in this example has a square or rectangular cross-sectional geometry to facilitate inclusion and operation of the diverter valve 144. The exhaust diverter valve 144 is moveable between open and closed positions with respect to permitting flow of the hot turbine exhaust stream E across the heat exchanger 32.

The exhaust diverter valve 144 is shown in solid lines in a fully closed position and is shown in phantom in a fully open position. In the closed position, the exhaust diverter valve 144 occupies the region upstream of the heat exchanger 32 and thus diverts at least a portion of the flow of the hot turbine exhaust stream, represented at E1, around and away from the heat exchanger 32. In the open position, the exhaust diverter valve 144 occupies the region offset from the heat exchanger 32 to permit at least a portion of the flow of the hot turbine exhaust stream, represented at E2, to flow across the heat exchanger 32.

In this example, the exhaust diverter valve 144 is pivotably moveable between the fully open and fully closed positions, as well as intermediate positions between fully open and fully closed. In the intermediate positions, the hot turbine exhaust stream E is partially diverted around the heat exchanger 32 such that a reduced amount of flow is permitted across the heat exchanger 32.

Figures 3A, 3B, and 3C illustrate a further embodiment of a recuperated gas turbine engine 120 and example modes of operation. In these examples, the engine 120 is similar to the engine 20 but additionally includes a controller 250 that is in communication with at least the compressor bleed line 36 and the temperature-control module 34 (or alternatively 134). The controller 250 may also be in communication with the engine parameter sensor 33, if used, and/or other sensors or controllers. The controller 250 includes hardware, software, or both that is programmed to carry out the functions described herein, which also represent methods of controlling the engine 120. In this regard, the controller 250 is configured to selectively regulate feed of compressed air through the compressor bleed line 36 to the heat exchanger 32 and is configured to selectively regulate flow of the hot turbine exhaust stream E (using the temperature-control module 34/134) with respect to the heat exchanger 32. For example, the controller 250 is configured to selectively regulate flow of the hot turbine exhaust stream with respect to or in response to the engine parameter, which is representative of the condition of the heat exchanger 32. As used herein, the engine parameter, whether an indirect parameter that correlates/maps to the heat exchanger 32 condition or a direct parameter taken in or at the heat exchanger 32, is referred to as a heat exchanger-engine parameter.

As examples, several modes of operation with regard to regulating the feed of compressed air and regulating flow of the hot turbine exhaust stream E are represented in Figures 3A, 3B, and 3C. Figure 3A illustrates a low power mode, Figure 3B illustrates a high power mode, and Figure 3C illustrates an intermediate power mode. The term "power mode" is used herein with respect to a back pressure generated on the turbine section 28 under certain conditions. For example, flow across the heat exchanger 32 causes a pressure drop in the hot turbine exhaust stream E and a resultant back pressure on the turbine section 28. Accordingly, higher pressure drop causes higher back pressure, which tends to reduce power of the turbine section 28.

In the low power mode shown in Figure 3A, the controller 250 opens bleed valve 36a to feed the compressed bleed air through the compressor bleed line 36 to the heat exchanger 32 and fully opens the exhaust diverter valve 144 to permit flow of the hot turbine exhaust stream E2 across the heat exchanger 32. The hot turbine exhaust stream E2 heats the compressed bleed air in the heat exchanger 32, which is then injected into the combustor section 26. The flow of the hot turbine exhaust stream E2 across the heat exchanger 32 causes a pressure drop and thus limits power output of the turbine section 28.

In the high power mode shown in Figure 3B, the controller 250 closes the bleed valve 36a to stop flow of the compressed bleed air to the heat exchanger 32 (represented by the dotted bleed line 36 and return line 38) and closes the exhaust diverter valve 144 to divert flow of the hot turbine exhaust stream E1 around the heat exchanger 32. Thus, there is no flow of compressed bleed air to the heat exchanger 32 or to the return line 38 into the combustor section 26. The flow of the hot turbine exhaust stream E1 around the heat exchanger 32 avoids the pressure drop and avoids the efficiency penalty of using compressor bleed air, and thus serves to increase the power output available to the turbine section 28. Furthermore, under relatively severe temperature ambient conditions or high power conditions, which increase temperature of the hot turbine exhaust stream E, the controller 250 enables switching into the high power mode to protect the heat exchanger 32 from direct exposure to such temperatures.

In the intermediate power mode shown in Figure 3C, the controller 250 opens or partially opens the bleed valve 36a to feed the compressed bleed air through the compressor bleed line 36 to the heat exchanger 32 and partially opens the exhaust diverter valve 144 to permit partial flow of the hot turbine exhaust stream E2 across the heat exchanger 32. The partial flow of hot turbine exhaust stream E2 heats the compressed bleed air in the heat exchanger 32, which is then injected into the combustor section 26. The partial flow of the hot turbine exhaust stream E2 serves to limit exposure of the heat exchanger 32 to the hot turbine exhaust stream E2 and thus facilitates protecting the heat exchanger 32 from high temperature exposure and/or modulating the temperature of the heat exchanger 32.

An additional or alternative intermediate power mode can instead include fully closing the exhaust diverter valve 144 to divert the flow of the hot turbine exhaust stream E1 around the heat exchanger 32. Thus, the flow of the compressed bleed air through the heat exchanger 32 serves to temporarily cool the heat exchanger 32 and provides further ability for temperature-modulation. Alternatively, the flow of compressed bleed air to the heat exchanger 32 is ceased, to increase power, for example.

The examples above are directed to selectively regulating the flow of the hot turbine exhaust stream E. Figure 4 illustrates another example of a recuperated gas turbine engine 220, which is directed to selectively regulating the temperature of the hot turbine exhaust stream E with respect to the heat exchanger-engine parameter. In this example, the bleed line 36 splits between a first branch 236-1 and a second branch 236-2. The first branch 236-1 leads into the heat exchanger 32 and the second branch 236-2 leads into the exhaust duct 30 upstream of the heat exchanger 32. A valve 260 is operable to control flow of the compressor bleed air to the second branch 236-2.

The temperature-control module 234 of the engine 220 includes the second branch 236-2 and the valve 260. The temperature-control module 234 is operable to control flow of the compressed bleed air to the second branch 236-2 and into the exhaust duct 30. The relatively cool compressor bleed air serves to reduce the temperature of the hot turbine exhaust stream, as represented at E3. For example, the flow of compressor bleed air into the exhaust duct 30 is controlled to modulate the temperature of the hot turbine exhaust stream, to protect the heat exchanger 32 from exposure to undesirably higher temperatures and/or modulate the temperature of the heat exchanger 32. As can be appreciated, a controller 350 similar to controller 250 could also be employed in the engine 220, to control the temperature-control module 234 and selectively regulate the temperature of the hot turbine exhaust stream with respect to the heat exchanger-engine parameter.

Figure 5 illustrates another example of a recuperated gas turbine engine 320, which is also directed to selectively regulating the temperature of the hot turbine exhaust stream E. In this example, the engine 320 includes a first compressor bleed line 336-1 and a second compressor bleed line 336-2. The first compressor bleed line 336-1 leads into the heat exchanger 32, similar to the compressor bleed line 36. The second compressor bleed line 336-2 independently leads from the compressor section 24 into the exhaust duct 30 upstream of the heat exchanger 32. That is, each compressor bleed line 336-1 and 336-2 is a dedicated line. In this regard, the compressor bleed lines 336-1 and 336-2 have corresponding bleed valves 336a and 336b, which can lead from different stages of the compressor section 24. For example, the bleed valve 336b of the second compressor bleed line 336-2 is located upstream of the bleed valve 336a of the first compressor bleed line 336-1. Of course, the use of the two full compressor bleed lines 336-1 and 336-2 may require a somewhat larger packaging envelope for the engine 320.

The temperature-control module 334 includes the additional, second compressor bleed line 336-2 and the bleed valve 336b. The temperature-control module 334 is operable to control flow through the second compressor bleed line 336-2 into the exhaust duct 30. Similar to the second branch 236-2, the relatively cool compressor bleed air serves to reduce the temperature of the hot turbine exhaust stream, as represented at E3. For example, the flow of compressor bleed air into the exhaust duct 30 is controlled to modulate the temperature of the hot turbine exhaust stream, to protect the heat exchanger 32 from exposure to undesirably higher temperatures and/or modulate the temperature of the heat exchanger 32. As can be appreciated, a controller 450 similar to controller 250 could also be employed in the engine 320, to control the temperature-control module 334 and selectively regulate the temperature of the hot turbine exhaust stream with respect to the heat exchanger-engine parameter.

The use of the compressor bleed air to cool the hot turbine exhaust stream using either the second branch 236-2 or the second compressor bleed line 336-2 penalizes efficiency and potentially limits the full power of the engines 220/320. Thus, these example configurations and control strategies may be used on a limited basis for relatively short periods of time and/or for engines that are intended predominantly for low-power missions that do not often need to operate at or close to full power.

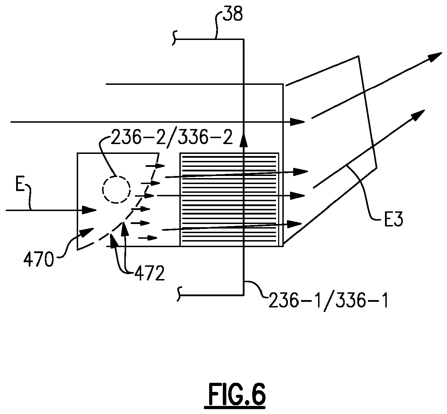

In a further example shown in Figure 6, the temperature-control module 234 or 334 of the prior examples additionally includes a flow distributor 470. The flow distributor 470 includes a plurality of cooling holes 472 upstream of the heat exchanger 32. The bleed line 236-2 or 336-2 supplies the compressor bleed air to the flow distributor 470. The compressor bleed air flows from the cooling holes 472 into the hot turbine exhaust stream E and reduces the temperature of the hot turbine exhaust stream, as again represented at E3.

In a further example, the flow distributor 470 is used to mitigate the efficiency and power penalties that come with use of compressor bleed air. For instance, referring again to Figure 5, if greater power is desired, the bleed valve 336a can be closed such that no compressor bleed air flows into the heat exchanger 32 or return line 38. Rather, only compressor bleed air from bleed valve 336b is used, which is upstream in the compressor section 24 and is thus less of an efficiency/power penalty. In this example, the compressor bleed air is provided only through the second bleed line 336-2 (or the second branch 236-2 for the examples of Figure 4) to reduce the temperature of the hot turbine exhaust stream.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A recuperated gas turbine engine (20; 120; 220; 320) comprising:
an engine core (22) including a compressor section (24), a combustor section (26), and a turbine section (28);
an exhaust duct (30) downstream of the turbine section (28) for receiving a hot turbine exhaust stream (E) from the turbine section (28), the exhaust duct (30) including a heat exchanger (32) and a temperature-control module (34) upstream of the heat exchanger (32); and
a compressor bleed line (36) leading from the compressor section (24) into the heat exchanger (32) and a compressor return line (38) leading from the heat exchanger (32) into the engine core (22) upstream of the combustor section (24), the compressor bleed line (36)
operable to selectively feed compressed air to the heat exchanger (32),
the temperature-control module (34) operable to selectively modulate at least one of temperature and flow of the hot turbine exhaust stream (E) with respect to the heat exchanger (32), wherein:
the bleed line (36) splits between first and second branches (236-1, 236-2), the first branch (236-1) leading into the heat exchanger (32) and the second branch (236-2) leading into the exhaust duct (30) upstream of the heat exchanger (32); or
the recuperated gas turbine engine (320) further comprises an additional compressor bleed line (336-2) independently leading from the compressor section (24) into the exhaust duct (30) upstream of the heat exchanger (32).

2. The recuperated gas turbine engine (20; 120; 220; 320) as recited in claim 1, wherein the temperature-control module (34) includes an exhaust diverter valve (144) in the exhaust duct (30), and the exhaust diverter valve (144) is moveable between open and closed positions with respect to permitting flow of the hot turbine exhaust stream (E) across the heat exchanger (32).

3. The recuperated gas turbine engine (220) as recited in claim 1 or 2, wherein the temperature-control module (34) includes the second branch (236-2) or the additional compressor bleed line (336-2) and a valve (260) operable to control flow through the second branch (236-2) or the additional compressor bleed line (336-2) into the exhaust duct (30).

4. The recuperated gas turbine engine (20; 120; 220; 320) as recited in any preceding claim, wherein the temperature-control module (34) includes a flow distributor (470) in the exhaust duct (30), the flow distributor (470) being in communication with either the compressor bleed line (36; 236-2) or an additional independent compressor bleed line (336-2), and the flow distributor (470) includes a plurality of cooling holes (472) opening to the exhaust duct (30).

5. The recuperated gas turbine engine (20; 120; 220; 320) as recited in any preceding claim, wherein the compressor section (24) includes an axial compressor (24a) and a centrifugal compressor (24b).

6. The recuperated gas turbine engine (20; 120; 220; 320) as recited in claim 5, wherein the axial compressor (24a) includes no more than three compressor stages.

7. The recuperated gas turbine engine (20; 120; 220; 320) as recited in any preceding claim, wherein the compressor section (24) has an overall pressure ratio ("OPR") in a range of 12 - 24.

8. The recuperated gas turbine engine (20; 120; 220; 320) as recited in any preceding claim, wherein the compressor section has a size rating of 0.7 pounds per second (0.3 kg/s) at an exit of the compressor section (24).

9. The recuperated gas turbine engine (20; 120; 220; 320) as recited in any preceding claim, further comprising:
a controller (250; 350; 450) in communication with at least the compressor bleed line (36) and the heat exchanger temperature-control module (34), the controller (250; 350; 450) configured to selectively regulate feed of compressed air through the compressor bleed line (36) into the heat exchanger (32) and configured to selectively regulate at least one of temperature and flow of the hot turbine exhaust stream (E) with respect to the heat exchanger (32).

10. The recuperated gas turbine engine (20; 120; 220; 320) as recited in claim 9, wherein the controller (250; 350; 450) is configured with at least low and high power modes with respect to back pressure on the turbine section (28), in the low power mode the controller (250; 350; 450) feeding the compressed air through the compressor bleed line (36) to the heat exchanger (32) and opening a or the exhaust diverter valve (144) to permit flow of the hot turbine exhaust stream (E) across the heat exchanger (32), and in the high power mode the controller (250; 350; 450) reducing feed of the compressed air through the compressor bleed line (36) to the heat exchanger (32) and closing the exhaust diverter valve (144) to reduce flow of the hot turbine exhaust stream (E) across the heat exchanger (32).

11. The recuperated gas turbine engine (20; 120; 220; 320) as recited in claim 9 or 10, wherein the controller (250; 350; 450) is configured to selectively regulate the temperature or the flow of the hot turbine exhaust stream (E) with respect to a heat-exchanger-engine parameter representative of a temperature of the heat exchanger (32).

12. A method for controlling a recuperated gas turbine engine (20; 120; 220; 320), the method comprising:
selectively feeding compressed air from a compressor bleed line (36) into a heat exchanger (37) in an exhaust duct (30) to heat the compressed air using a hot turbine exhaust stream (E) in the exhaust duct (30) and feed the heated compressed air from the heat exchanger (32) into an inlet of the combustor section (26), the exhaust duct (30) downstream of an engine core (22) that includes a compressor section (24), a combustor section (26), and a turbine section (28); and
regulating at least one of temperature and flow of the hot turbine exhaust stream (E) in the exhaust duct (30) with respect to the heat exchanger (32), wherein:
the bleed line (36) splits between first and second branches (236-1, 236-2), the first branch (236-1) leading into the heat exchanger (32) and the second branch (236-2) leading into the exhaust duct (30) upstream of the heat exchanger (32); or
the recuperated gas turbine engine (320) comprises an additional compressor bleed line (336-2) independently leading from the compressor section (24) into the exhaust duct (30) upstream of the heat exchanger (32).

## Patentansprüche

1. Rekuperatives Gasturbinentriebwerk (20; 120; 220; 320), umfassend:
einen Triebwerkskern (22), welcher einen Verdichterabschnitt (24), einen Verbrennerabschnitt (26) und einen Turbinenabschnitt (28) beinhaltet;
einen Abgaskanal (30) stromabwärts von dem Turbinenabschnitt (28), um einen heißen Turbinenabgasstrom (E) von dem Turbinenabschnitt (28) zu empfangen, wobei der Abgaskanal (30) einen Wärmetauscher (32) und ein Temperatursteuermodul (34) stromaufwärts von dem Wärmetauscher (32) beinhaltet; und
eine Verdichterentnahmeleitung (36), welche von dem Verdichterabschnitt (24) in den Wärmetauscher (32) führt, und eine Verdichterrückführleitung (38), welche von dem Wärmetauscher (32) in den Triebwerkskern (22) stromaufwärts von dem Verbrennerabschnitt (24) führt, wobei die Verdichterentnahmeleitung (36) dazu betrieben werden kann, dem Wärmetauscher selektiv verdichtete Luft zuzuführen,
wobei das Temperatursteuermodul (34) dazu betrieben werden kann, mindestens eines von einer Temperatur und ein Fließen des heißen Turbinenabgasstroms (E) bezogen auf den Wärmetauscher (32) selektiv zu modulieren, wobei:
sich die Entnahmeleitung (36) zwischen einer ersten Abzweigung und einer zweiten Abzweigung (236-1, 236-2) teilt, wobei die erste Abzweigung (236-1) in den Wärmetauscher (32) führt und die zweite Abzweigung (236-2) in den Abgaskanal (30) stromaufwärts von dem Wärmetauscher (32) führt; oder
das rekuperative Gasturbinentriebwerk (320) ferner eine zusätzliche Verdichterentnahmeleitung (336-2) umfasst, welche unabhängig von dem Verdichterabschnitt (24) in den Abgaskanal (30) stromaufwärts von dem Wärmetauscher (32) führt.

2. Rekuperatives Gasturbinentriebwerk (20; 120; 220; 320) nach Anspruch 1, wobei das Temperatursteuermodul (34) ein Abgasumleitventil (144) in dem Abgaskanal (30) beinhaltet, und wobei das Abgasumleitventil (144) zwischen einer offenen und einer geschlossenen Position beweglich ist, um einen Fluss des heißen Turbinenabgasstroms (E) durch den Wärmetauscher (32) zu erlauben.

3. Rekuperatives Gasturbinentriebwerk (220) nach Anspruch 1 oder 2, wobei das Temperatursteuermodul (34) die zweite Abzweigung (236-2) oder die zusätzliche Verdichterentnahmeleitung (336-2) und ein Ventil (260) beinhaltet, welches dazu betrieben werden kann, einen Fluss durch die zweite Abzweigung (236-2) zu steuern oder die zusätzliche Verdichterentnahmeleitung (336-2) in den Abgaskanal (30) zu steuern.

4. Rekuperatives Gasturbinentriebwerk (20; 120; 220; 320) nach einem der vorstehenden Ansprüche, wobei das temperaturgesteuerte Modul (34) einen Flussverteiler (470) in dem Abgaskanal (30) beinhaltet, wobei der Flussverteiler (470) entweder mit der Verdichterentnahmeleitung (36; 236-2) oder einer zusätzlichen Verdichterentnahmeleitung (336-2) in Kommunikation zu steht, und der Flussverteiler (470) eine Vielzahl von Kühllöchern (472) beinhaltet, welche sich in den Abgaskanal (30) öffnen.

5. Rekuperatives Gasturbinentriebwerk (20; 120; 220; 320) nach einen der vorstehenden Ansprüche, wobei der Verdichterabschnitt (24) einen axialen Verdichter (24a) und einen zentrifugalen Verdichter (24b) beinhaltet.

6. Rekuperatives Gasturbinentriebwerk (20; 120; 220; 320) nach Anspruch 5, wobei der axiale Verdichter (24a) nicht mehr als drei Verdichterstufen beinhaltet.

7. Rekuperatives Gasturbinentriebwerk (20; 120; 220; 320) nach einem der vorstehenden Ansprüche, wobei der Verdichterabschnitt (24) einen Gesamtdruckverhältnis ("OPR") in einem Bereich von 12-24 aufweist.

8. Rekuperatives Gasturbinentriebwerk (20; 120; 220; 320) nach einen der vorstehenden Ansprüche, wobei der Verdichterabschnitt einen Massenstrom von 0,7 Pfund pro Sekunde (0,3 kg/s) an einem Ausgang des Verdichterabschnitts (24) aufweist.

9. Rekuperatives Gasturbinentriebwerk (20; 120; 220; 320) nach einen der vorstehenden Ansprüche, ferner umfassend:
eine Steuerung (250; 350; 450), welche mindestens mit der Verdichterentnahmeleitung (36) und dem Wärmetauschertemperatursteuermodul (34) in Kommunikation steht, wobei die Steuerung (250; 350; 450) dazu konfiguriert ist, eine Zufuhr von verdichteter Luft durch die Verdichterentnahmeleitung (36) in den Wärmetauscher (32) selektiv zu regulieren und dazu konfiguriert ist, mindestens eines von einer Temperatur und einem Fluss des heißen Turbinenabgasstroms (E) bezogen auf den Wärmetauscher (32) selektiv zu regulieren.

10. Rekuperatives Gasturbinentriebwerk (20; 120; 220; 320) nach Anspruch 9, wobei die Steuerung (250; 350; 450) mit mindestens Niedrig- und Hochleistungsmodi bezogen auf den Gegendruck auf den Turbinenabschnitt (28) konfiguriert ist, wobei die Steuerung (250; 350; 450) in dem Niedrigleistungsmodus dem Wärmetauscher (32) die verdichtete Luft durch die Verdichterentnahmeleitung (36) zuführt, und ein oder das Abgasumleitventil (144) öffnet, um einen Fluss des heißen Turbinenabgasstroms (E) durch den Wärmetauscher (32) zu erlauben, und eine Zufuhr der verdichteten Luft durch die Verdichterentnahmeleitung (36) zu dem Wärmetauscher (32) in dem Hochleistungsmodus der Steuerung (250; 350; 450) reduziert und das Abgasumleitventil (144) schließt, um einen Fluss des heißen Abgasstroms (E) durch en Wärmetauscher (32) zu reduzieren.

11. Rekuperatives Gasturbinentriebwerk (20; 120; 220; 320) nach Anspruch 9 oder 10, wobei die Steuerung (250; 350; 450) dazu konfiguriert ist, die Temperatur oder den Fluss des heißen Turbinenabgasstroms (E) bezogen auf einen Wärmetauschertriebwerksparameter, welcher eine Temperatur des Wärmetauschers (32) repräsentiert, selektiv zu regulieren.

12. Verfahren zum Steuern eines rekuperativen Gasturbinentriebwerk (20; 120; 220; 320), wobei das Verfahren Folgendes umfasst:
selektives Zuführen von verdichteter Luft von einer Verdichterentnahmeleitung (36) in einen Wärmetauscher (37) in einem Abgaskanal (30), um die verdichtete Luft mithilfe eines heißen Turbinenabgasstroms (E) in dem Abgaskanal (30) zu erwärmen und die erwärmte verdichtete Luft aus dem Wärmetauscher (32) in einen Einlass des Verdichterabschnitts (26) zuzuführen, den Abgaskanal (30) stromabwärts von dem Triebwerkskern (22), welcher einen Verdichterabschnitt (24), einen Verbrennerabschnitt (26) und einen Turbinenabschnitt (28) beinhaltet; und
Regulieren mindestens eines von einer Temperatur und eines Flusses des heißen Turbinenabgasstroms (E) in dem Abgaskanal (30) bezogen auf den Wärmetauscher (32), wobei:
sich die Entnahmeleitung (36) zwischen einer ersten Abzweigung und einer zweiten Abzweigung (236-1, 236-2) teilt, wobei die erste Abzweigung (236-1) in den Wärmetauscher (32) führt und die zweite Abzweigung (236-2) in den Abgaskanal (30) stromaufwärts von dem Wärmetauscher (32) führt; oder
das rekuperative Gasturbinentriebwerk (320) eine zusätzliche Verdichterentnahmeleitung (336-2) umfasst, welche von dem Verdichterabschnitt (24) unabhängig in den Abgaskanal (30) stromaufwärts von dem Wärmetauscher (32) führt.

## Revendications

1. Moteur à turbine à récupération de gaz (20 ; 120 ; 220 ; 320) comprenant :
un noyau de moteur (22) incluant une section de compresseur (24), une section de chambre de combustion (26) et une section de turbine (28) ;
un conduit d'échappement (30) en aval de la section de turbine (28) destiné à recevoir un flux d'échappement chaud de turbine (E) provenant de la section de turbine (28), le conduit d'échappement (30) incluant un échangeur de chaleur (32) et un module de commande de température (34) en amont de l'échangeur de chaleur (32) ; et
une conduite de purge de compresseur (36) menant de la section de compresseur (24) dans l'échangeur de chaleur (32) et une conduite de retour de compresseur (38) menant de l'échangeur de chaleur (32) dans le noyau de moteur (22) en amont de la section de chambre de combustion (24), la conduite de purge de compresseur (36) pouvant être utilisée pour alimenter sélectivement en air comprimé l'échangeur de chaleur (32),
le module de commande de température (34) pouvant être utilisé pour moduler sélectivement au moins un élément parmi la température et l'écoulement du flux d'échappement chaud de turbine (E) par rapport à l'échangeur de chaleur (32), dans lequel :
la conduite de purge (36) se divise entre des première et seconde branches (236-1, 236-2), la première branche (236-1) menant dans l'échangeur de chaleur (32) et la seconde branche (236-2) menant dans le conduit d'échappement (30) en amont de l'échangeur de chaleur (32) ; ou
le moteur à turbine à récupération de gaz (320) comprend en outre une conduite de purge de compresseur supplémentaire (336-2) menant indépendamment de la section de compresseur (24) dans le conduit d'échappement (30) en amont de l' échangeur de chaleur (32) .

2. Moteur à turbine à récupération de gaz (20 ; 120 ; 220 ; 320) selon la revendication 1, dans lequel le module de commande de température (34) inclut une vanne de dérivation d'échappement (144) dans le conduit d'échappement (30), et la vanne de dérivation (144) est mobile entre des positions ouverte et fermée pour permettre l'écoulement du flux d'échappement chaud de turbine (E) à travers l'échangeur de chaleur (32).

3. Moteur à turbine à récupération de gaz (220) selon la revendication 1 ou 2, dans lequel le module de commande de température (34) inclut la seconde branche (236-2) ou la conduite de purge de compresseur supplémentaire (336-2) et une vanne (260) pouvant être utilisée pour commander l'écoulement à travers la seconde branche (236-2) ou la conduite de purge de compresseur supplémentaire (336-2) dans le conduit d'échappement (30).

4. Moteur à turbine à récupération de gaz (20 ; 120 ; 220 ; 320) selon une quelconque revendication précédente, dans lequel le module de commande de température (34) inclut un distributeur d'écoulement (470) dans le conduit d'échappement (30), le distributeur d'écoulement (470) étant en communication soit avec la conduite de purge de compresseur (36 ; 236-2) soit avec une conduite de purge de compresseur indépendante supplémentaire (336-2), et le distributeur d'écoulement (470) inclut une pluralité de trous de refroidissement (472) s'ouvrant sur le conduit d'échappement (30).

5. Moteur à turbine à récupération de gaz (20 ; 120 ; 220 ; 320) selon une quelconque revendication précédente, dans lequel la section de compresseur (24) inclut un compresseur axial (24a) et un compresseur centrifuge (24b).

6. Moteur à turbine à récupération de gaz (20 ; 120 ; 220 ; 320) selon la revendication 5, dans lequel le compresseur axial (24a) n'inclut pas plus de trois étages de compresseur.

7. Moteur à turbine à récupération de gaz (20 ; 120 ; 220 ; 320) selon une quelconque revendication précédente, dans lequel la section de compresseur (24) a un rapport de pression globale (« OPR ») dans une plage de 12 à 24.

8. Moteur à turbine à récupération de gaz (20 ; 120 ; 220 ; 320) selon une quelconque revendication précédente, dans lequel la section de compresseur a une taille nominale de 0,7 livre par seconde (0,3 kg/s) au niveau d'une sortie de la section de compresseur (24).

9. Moteur à turbine à récupération de gaz (20 ; 120 ; 220 ; 320) selon une quelconque revendication précédente, comprenant en outre :
un dispositif de commande (250 ; 350 ; 450) en communication avec au moins la conduite de purge de compresseur (36) et le module de commande de température d'échangeur de chaleur (34), le dispositif de commande (250 ; 350 ; 450) étant configuré pour réguler sélectivement l'alimentation en air comprimé à travers la conduite de purge de compresseur (36) dans l'échangeur de chaleur (32) et configuré pour réguler sélectivement au moins un élément parmi la température et l'écoulement du flux d'échappement chaud de turbine (E) par rapport à l'échangeur de chaleur (32).

10. Moteur à turbine à récupération de gaz (20 ; 120 ; 220 ; 320) selon la revendication 9, dans lequel le dispositif de commande (250 ; 350 ; 450) est configuré avec au moins des modes de puissance faible et élevée par rapport à la contre-pression sur la section de turbine (28), dans le mode de puissance faible, le dispositif de commande (250 ; 350 ; 450) alimentant en air comprimé à travers la conduite de purge de compresseur (36) vers l'échangeur de chaleur (32) et ouvrant une ou la vanne de dérivation d'échappement (144) pour permettre l'écoulement du flux d'échappement chaud de turbine (E) à travers l'échangeur de chaleur (32), et dans le mode de puissance élevée, le dispositif de commande (250 ; 350 ; 450) réduisant l'alimentation en air comprimé à travers la conduite de purge de compresseur (36) vers l'échangeur de chaleur (32) et fermant la vanne de dérivation d'échappement (144) pour réduire l'écoulement du flux d'échappement chaud de turbine (E) à travers l'échangeur de chaleur (32).

11. Moteur à turbine à récupération de gaz (20 ; 120 ; 220 ; 320) selon la revendication 9 ou 10, dans lequel le dispositif de commande (250 ; 350 ; 450) est configuré pour réguler sélectivement la température ou l'écoulement du flux d'échappement chaud de turbine (E) par rapport à un paramètre échangeur de chaleur-moteur représentatif d'une température de l'échangeur de chaleur (32).

12. Procédé de commande d'un moteur à turbine à récupération de gaz (20 ; 120 ; 220 ; 320), le procédé comprenant :
l'alimentation sélective en air comprimé à partir d'une conduite de purge de compresseur (36) dans un échangeur de chaleur (37) dans un conduit d'échappement (30) pour chauffer l'air comprimé en utilisant un flux d'échappement chaud de turbine (E) dans le conduit d'échappement (30) et pour alimenter en air comprimé chauffé à partir de l'échangeur de chaleur (32) dans une entrée de la section de chambre de combustion (26), le conduit d'échappement (30) en aval d'un noyau de moteur (22) qui inclut une section de compresseur (24), une section de chambre de combustion (26) et une section de turbine (28) ; et
la régulation d'au moins un élément parmi la température et l'écoulement du flux d'échappement chaud de turbine (E) dans le conduit d'échappement (30) par rapport à l'échangeur de chaleur (32), dans lequel :
la conduite de purge (36) se divise entre des première et seconde branches (236-1, 236-2), la première branche (236-1) menant dans l'échangeur de chaleur (32) et la seconde branche (236-2) menant dans le conduit d'échappement (30) en amont de l'échangeur de chaleur (32) ; ou
le moteur à turbine à récupération de gaz (320) comprend une conduite de purge de compresseur supplémentaire (336-2) menant indépendamment de la section de compresseur (24) dans le conduit d'échappement (30) en amont de l'échangeur de chaleur (32).
